# EUROPÄISCHE PATENTSCHRIFT

(11) **EP 2 109 488 B1**
(45) Veröffentlichungstag und Bekanntmachung des Hinweises auf die Patenterteilung: **21.07.2010**
(21) Anmeldenummer: 07702691.2
(22) Anmeldetag: 11.01.2007
(51) Int. Cl.: B01D 29/15

(54) **FILTER FÜR FLUIDE**
FILTER FOR FLUIDS
FILTRE POUR FLUIDES

(43) Veröffentlichungstag der Anmeldung: 21.10.2009
(73) Patentinhaber: TAPROGGE GMBH, D-58300 Wetter (DE)
(72) Erfinder: KELLER, Guido, 58093 Hagen (DE); ALTEGOER, Dietmar, 58452 Witten (DE); TROSTMANN, Dirk, 58300 Wetter (DE)
(74) Vertreter: Wenzel & Kalkoff
(86) Internationale Anmeldenummer: PCT/EP2007/000210
(87) Internationale Veröffentlichungsnummer: WO 2008/083714

(56) Entgegenhaltungen:
- DE-A1- 3 829 360
- DE-A1- 19 819 980
- US-A- 5 192 429

## Beschreibung

Die Erfindung betrifft ein Filter für Fluide, insbesondere Wasser,
- das eine Filterfläche und einen drehbaren Sprüharm in dem Filter aufweist,
- mit dem ein Spülmedium gegen die Filterfläche geführt wird.

Es geht hier primär - aber nicht ausschließlich - um Vorfilter ("prescreen"), die unterhalb einer Wasseroberfläche auf der Pumpensaugseite einer Wasserentnahmestelle angeordnet werden.

Ein Filter dieser Art geht aus der US 6,508,933 B2 als bekannt hervor. Das Filter besteht aus einer zylinderförmigen Wandung aus Kunststoff, die auf einer Seite durch einen ebenfalls aus Kunststoff bestehenden Boden verschlossen und auf der anderen Seite durchgehend mit einem Sieb als Filterfläche abgedeckt ist. Ein mit Düsen besetzter Sprüharm ist drehbar an einem mittig am Boden des Filters befestigten Ständer angeordnet. Im unteren Bereich des Filters ist als Austrittsöffnung für das Wasser ein mit Öffnungen versehenes Rohr nach außen durch die Wandung hindurchgeführt und an die Saugseite einer Pumpe angeschlossen. Den Düsen des Sprüharms kann Druckwasser oder Druckluft über eine Leitung zugeführt werden, die durch die Wandung des Filters und durch den Ständer des Sprüharms bis zu diesem hindurchgeführt ist. Wenn der Pumpensaugdruck auf das Auslassrohr wirksam wird, wird Wasser aus der Umgebung durch die Filterfläche hindurch in den Innenraum des Filters und von dort, von Verschmutzungen befreit, über den Auslass und die Pumpe dem Wassersystem zugeführt. Die Filterfläche wird kontinuierlich von Verschmutzungen, die sich auf der Außenseite der Filterfläche ablagern, gereinigt, indem der sich drehende Sprüharm über die Druckwasser- oder Druckluftleitung zugeführtes Spülwasser oder Druckluft von innen gegen die Filterfläche führt und so die Ablagerungen löst.

Die Drehbewegung wird dem Sprüharm über eine Schräglage der Düsen an dem Sprüharm erteilt. Durch die Aufteilung des Spülmediums zur gleichzeitigen Nutzung zu Antriebs- und Reinigungszwecken wird der Wirkungsgrad der Reinigung der Spülmediumstrahlen herabgesetzt. Außerdem ist durch den Druckwasserantrieb eine Drehbewegung des Sprüharms nur in einer gleichbleibenden Drehrichtung sowie kontinuierlich möglich. Darüber hinaus ist die Filterfläche im Verhältnis zum Volumen und zur Baugröße des Filters vergleichsweise gering.

Es besteht deshalb die Aufgabe, ein leistungsfähiges Filter und eine Verbesserung der Reinigung der Filterfläche zu schaffen.

Erfindungsgemäß wird diese Aufgabe - ausgehend von dem eingangs genannten Filter - dadurch gelöst, dass
- ein fluidsicherer Trommelmotor in dem Filter angeordnet ist,
- der mindestens einen Sprüharm antreibt, und
- **der Sprüharm an der Trommel des Trommelmotors befestigt ist.**

Das erfindungsgemäße Filter weist einen hohen Wirkungsgrad auf, weil seine gesamte zylindrische Filterfläche, wenn sie zylindrisch ist, für den Wassereintritt in das Filter zur Verfügung steht und mindestens ein Ende des Filters uneingeschränkt als Austrittsöffnung dienen kann. Der fluidsichere Trommelmotor lässt sich aufgrund seiner schlanken Ausführung platzsparend als Antrieb des drehbaren Sprüharms anordnen, dessen Rotationsbewegung im wesentlichen sowie mindestens teilweise der Form der Filterfläche entspricht. Einer Austrittsöffnung kann eine geschlossene Abdeckung des Filters zur Aufnahme einer Halterung für ein Ende des Trommelmotors sowie die Zuführung des Spülmediums, vorzugsweise Druckluft oder Druckwasser, gegenüberliegen, während im Bereich der gegenüberliegenden Austrittsöffnung das andere Ende des Trommelmotors befestigt sein kann.

Das Filter kann aus Stahl, Beton oder Kunststoff ausgeführt sein.

Trommelmotoren sind aus der Fördertechnik bekannte Antriebselemente. Üblicherweise sind die in den Trommelmotoren eingesetzten Wälzlager für die Aufnahme von Radiallasten wie z.B. Bandzugkräften bei Förderbandantrieben ausgelegt. Wenn für das erfindungsgemäße Filter nun ein Trommelmotor verwendet wird, ist es zweckmäßig, einen Standardtrommelmotor gegebenenfalls mit einem zusätzlichen Axiallager einzusetzen. Fluidsicherheit bedeutet bei der erfindungsgemäßen Verwendung des Trommelmotors vorzugsweise eine seewasserfeste Edelstahlausführung für alle mediumberührten Teile und eine verstärkte Abdichtung des Motors gegen Wassereintritt. Der Antrieb des Sprüharms durch den

Trommelmotor erlaubt dem Konstrukteur zahlreiche Gestaltungsmöglichkeiten für die Form des Filters und für die Form und Anordnung des Sprüharms und für dessen Drehbewegung durch eine entsprechende Motorsteuerung.

Vorzugsweise weist das Filter eine geschlossene Mantelfläche auf, die mindestens teilweise aus Filterfläche besteht (Anspruch 2). Damit wird deutlich, daß sich die Erfindung für jedes Filter - unabhängig von seiner Querschnitts- und Längsschnittform - eignet, soweit es einen geschlossenen Innenraum aufweist und seine Mantelfläche mindestens teilweise aus Filterfläche besteht. Das bedeutet, daß auch Filter mit Unterbrechungen in der Filterfläche bzw. sonstige, möglicherweise geschlossene Flächen zwischen den Filterflächen von einer erfindungsgemäßen Ausführung erfaßt sind.

Was die Form des Filters anbetrifft, wird bevorzugt, daß das Filter ein im Querschnitt ring- oder gleichmäßig oder ungleichmäßig polygonförmiges und/oder im Längsschnitt zylinder- oder kegelstumpfförmiges Filterelement aufweist (Anspruch 3). Daraus ergibt sich, daß ein Filterelement des Filters im Querschnitt ringförmig, also kreisringförmig oder ringförmig mit von der Kreisform abweichendem Verlauf z. B. oval mit halb- oder mindestens viertelkreisförmigen Enden sein kann. Hierfür ist eine hin- und hergehende Bewegung im Sinne einer Scheibenwischerbewegung des Sprüharms möglich, um das Spülmedium gegen die Filterfläche zu führen. Im Falle von im Querschnitt ovalen Filterelementen mit z. B. halbkreisförmigen Enden sind sowohl entsprechend aufeinander abgestimmte Rotationsbewegungen als auch Scheibenwischerbewegungen von mindestens zwei hierfür vorgesehenen Sprüharmen geeignet. Die Polygonform schließt sämtliche im Querschnitt eckigen Filterflächenformen ein. Auch für die Form des Filterelementes im Längsschnitt sind vielfältige Formen möglich, wobei zylinder- oder kegelstumpfförmige Filterelemente nur als bevorzugte Formen angegeben sind.

Auch im Querschnitt kreissegmentförmige Filterelemente sind möglich (Anspruch 4). Für diesen Fall kann das Spülmedium z. B. mit einer Scheibenwischerbewegung von Sprüharm und Düse auf das im Querschnitt kreissegmentförmige Filterelement einwirken.

Eine Weiterbildung der Erfindung ist dadurch gekennzeichnet, daß das Filter im Querschnitt aneinander anschließende Filterflächenteile aufweist (Anspruch 5). In diesem Fall setzt sich die Filterfläche aus einer Mehr- oder Vielzahl einzelner Filterflächen zusammen, und zwar unabhängig davon, ob es sich z. B. um eine zylindrische oder eine gleichmäßig oder ungleichmäßig polygonförmige Filterfläche handelt. Dabei können die Filterflächenteile z. B. aus Segmenten wie halbkreisförmigen Segmenten zusammengesetzt sein. Die ringförmigen Filterflächenteile oder Segmente können selbst als Filterfläche dienen oder als Tragkonstruktion zur Aufnahme von Filterflächen benutzt werden. Derartige Aufteilungen können zweckmäßig sein, wenn die Größe und/oder das Gewicht eine Aufteilung z. B. für den Transport oder die Montage des Filters sinnvoll erscheinen lassen.

Nach einer wesentlichen Ausgestaltung der Erfindung ist es möglich; daß das Filter aufeinander gesetzte Filterelemente aufweist (Anspruch 6). Dadurch können bspw. mindestens zwei Filterelemente aufeinander gesetzt und fest miteinander verbunden werden, die gemeinsam einen Trommelmotor aufweisen. Die Bildung eines Filters aus mehreren aufeinander gesetzten Filterelementen gestattet die Schaffung einer Filtereinheit mit entsprechend hohem Durchsatz an gefiltertem Wasser. Ein Filter aus zwei, drei oder mehr Filterelementen läßt eine Bauweise wie aus dem Baukasten zu, ohne daß hierfür der Entwurf und die Herstellung von Filterelementen mit großer Bauhöhe erforderlich ist. Auch wenn die Filterhöhe zunimmt, läßt sich durch Wahl eines Trommelmotors von entsprechender Länge und mit entsprechend langen Endstutzen ein einziger Trommelmotor für den Drehantrieb mehrerer übereinander zum Einsatz kommender Spülarme verwenden.

Es wird bevorzugt, daß das Filter Halterungen zur Befestigung des Trommelmotors aufweist (Anspruch 7). Für die Ausbildung der Halterungen als Verbindung zwischen dem Filter und dem Trommelmotor gibt es vielfältige Möglichkeiten.

**Erfindungsgemäß ist vorgesehen,** daß der Sprüharm an der Trommel des Trommelmotors befestigt ist. Durch eine unmittelbare Befestigung des Sprüharms an der Trommel des Motors entfällt eine eigene Drehlagerung des Sprüharms, weil die Trommel des Trommelmotors die Rotationsbewegung des Sprüharms bewirkt und gleichzeitig Träger des Sprüharms ist. Es ergibt sich eine Vielzahl von Gestaltungsmöglichkeiten für diese Anbringung des Sprüharms, weil hierfür die gesamte Länge der Trommel des Motors zur Verfügung steht. Deshalb sind verschiedenartige Formen und Befestigungsorte für den Sprüharm möglich. Neben einer Befestigung des Sprüharms an der Trommel des Motors kann der

Sprüharm jedoch zusätzlich eine Drehlagerung an dem Filter erhalten.

Auch aus diesem Grunde wird bevorzugt, daß der von dem Trommelmotor angetriebene Sprüharm drehbar an dem Filter gelagert ist (Anspruch 8). In diesem Fall erteilt der Motor die Drehbewegung dem Sprüharm über eine unmittelbare Verbindung zwischen Trommel und Sprüharm oder auch durch Zwischenschaltung weiterer Drehkraftübertragungselemente, während der Sprüharm drehbar am Filter gelagert ist.

Eine Weiterbildung der Erfindung ist dadurch gekennzeichnet, daß das aus einem oder mehreren Filterelementen gebildete Filter mindestens zwei Sprüharme aufweist, die auf gleicher Höhe des Filterelementes umlaufen oder die - in Drehachsenrichtung gesehen - übereinander angeordnet sind und von dem gleichen Trommelmotor oder getrennt von mindestens zwei Trommelmotoren angetrieben sind (Anspruch 9). Diese Weiterbildung berücksichtigt sowohl Filter, die aus mehreren aufeinander gesetzten Filterelementen bestehen als auch solche Filter, die aufgrund ihrer Größe und/oder Querschnittsform mehr als einen Sprüharm beanspruchen. So läßt sich die Bestimmung der Anzahl der benötigten Sprüharme und deren Anordnung der jeweils im Hinblick auf Längs- oder Querschnitt gewählten Filterform über den einfachsten Fall hinaus anpassen, wo nur ein Sprüharm pro Filterelement z. B. mit Zylinderform gebraucht wird. Es können bspw. zwei Sprüharme nebeneinander in einem wannenförmigen Filter mit z. B. halbkreisförmigen Filterenden umlaufen und, wenn sie vom gleichen Trommelmotor angetrieben werden, eine entsprechende Antriebsverbindung aufweisen. Grundsätzlich kann nach dieser Weiterbildung der Trommelmotor in einem z. B. aus zwei Filterelementen bestehenden Filter entweder nur einen Sprüharm mit mindestens einer Düse für die Filterflächen beider Filterelemente oder mehrere, vorzugsweise zwei Sprüharme tragen, die jeweils einem der beiden Filterelemente zugeordnet sind. Es kann auch von Vorteil sein, wenn auf gleicher Höhe des Filters mehr als ein Sprüharm umläuft, nämlich vor allem dann, wenn ein hoher Verschmutzungsgrad der Filterfläche zu erwarten ist.

Es wird bevorzugt, daß der Trommelmotor koaxial in dem Filter angeordnet ist (Anspruch 10), wobei zweckmäßig das Ende des Trommelmotors in einer Halterung im Bereich der Austrittsöffnung und das andere Ende im Bereich des geschlossenen Endes des Filters, also z. B. im Bereich der Abdeckung des Filters, befestigt ist (Anspruch 11). Diese Anordnung und Befestigungsmöglichkeit für den Trommelmotor im Filter verdeutlicht den einfachen sowie platzsparenden Einbau des Trommelmotors in dem Filter.

Nach einer Weiterbildung der Erfindung ist an dem geschlossenen Ende des Filters, also an der Abdeckplatte, ein Zuführrohr für das Spülmedium angeordnet, mit dem ein Anschluss des Spülarms durch eine Drehdurchführung drehbar verbunden ist (Anspruch 12). Durch diese Anordnung wird in einfacher Weise, nämlich durch ein durch die Abdeckung geführtes und dort befestigtes Rohr und z.B. eine auf dem Rohr als Anschluss des Spülarms drehbar gelagerte und mit einer Drehdurchführung versehene Muffe, die Zuführung des Druckwassers oder der Druckluft zu dem Spülarm gestaltet. Gleichzeitig nimmt das innere Rohrende zweckmäßig ein Ende des Trommelmotors auf, so dass hierfür keine gesonderte Befestigungsmöglichkeit am Filter selbst erforderlich ist.

Zweckmäßig trägt der Sprüharm an seinem freien Ende mindestens eine Düse, deren Öffnung auf die Innenseite der Filterfläche gerichtet ist und sich in kurzem Abstand von dieser befindet (Anspruch 13). Im Gegensatz zu der eingangs beschriebenen bekannten Lösung für ein Filter dieser Art lässt sich mit einer erfindungsgemäß gestalteten und angeordneten Düse an dem freien Ende des Sprüharms ein hoher Spülwirkungsgrad erzielen, weil die Spüldruckflüssigkeit oder Spüldruckluft ausschließlich das im Bereich der Innenseite der Filterfläche befindliche Wasser mit hohem Druck durch die Filterfläche hindurch zurückdrückt und dabei Ablagerungen von der Außenseite der Filterfläche löst und entfernt und nicht etwa auch noch den Sprüharm antreiben muss. Bei Verwendung polygoner Filterflächen, z.B. einer Vielzahl von ebenen Filtersegmenten, lässt sich analog eine gute Reinigungswirkung erzeugen.

Vorzugsweise entspricht die Länge der Düse im Wesentlichen der Höhe der Filterfläche (Anspruch 14). Eine solche Ausführung ist wirkungsvoller als die Anordnung von Einzeldüsen wie bei der eingangs genannten bekannten Bauart. Die Öffnung der Düse kann durchgehend gestaltet oder in Öffnungsabschnitte unterteilt sein (Anspruch 15).

Vorzugsweise ist die Querschnittsform der Düse, insbesondere die Form der Düsenöffnung, der Wölbung der Filterfläche angepasst (Anspruch 16). Dadurch ergibt sich ein gleichmäßiger Druck des Spülwassers auf die Filterfläche.

Die Breite der Düse soll einem Umfangsabschnitt der zylindrischen Filterfläche von 5-90°, vorzugsweise von 10-40° entsprechen (Anspruch 17). Die Wahl der Düsengröße hängt von dem Verschmutzungsgrad sowie der Art der Verschmutzungen ebenso ab wie von anderen Faktoren wie der Wahl der Art des Umlaufs der Düsen - kontinuierlich oder in vorbestimmter Weise diskontinuierlich.

Nach einer Weiterbildung der Erfindung weist die Filterfläche an ihrer Innenseite zu ihrer Längsmittelachse parallele Stege auf, mit denen die Innenseite des Filters in Kammern unterteilt ist, deren Umfangsabschnitt im Wesentlichen der Breite der Düsenöffnungen entspricht (Anspruch 18). Wenn eine dieser Kammern von einer Düsenöffnung überdeckt wird, gelangt das aus der Düsenöffnung strömende Druckspülwasser nahezu vollständig auf die kammerseitige Filterfläche, also ohne seitlich auszuweichen, so dass auf diese Weise eine besonders hohe Spülwirkung erreicht wird.

Eine Weiterbildung der Erfindung ist gekennzeichnet durch eine Steuerung des Trommelmotors, mit der die Drehrichtung des Trommelmotors und des Sprüharms nach einer vorgegebenen Drehbewegung von z.B. 180° oder, falls die Fortsetzung der Drehbewegung des Sprüharms durch ein Hindernis blockiert wird, umgekehrt wird (Anspruch 19).

Es wird bevorzugt, daß das Filter über eine Leitung oder unmittelbar mit der Saugseite einer Pumpe verbunden ist (Anspruch 20). Wesentlich ist hierbei nur, daß in dem Filter ein Saugdruck erzeugt wird, mit dem das Einströmen des Wassers durch die Filterfläche hindurch in das Innere des Filters bewirkt wird.

Ein Ausführungsbeispiel der Erfindung wird nachstehend mit Bezug auf die Zeichnungen näher erläutert. In den Zeichnungen zeigen:
- Fig. 1: eine Ansicht eines Filters bestehend aus zwei übereinander angeordneten Filterelementen als Längsschnitt;
- Fig. 2: eine Draufsicht auf den Filter von Fig. 1 im Schnitt längs der Schnittlinie A-A von Fig. 1;
- Fig. 3: eine teilweise geschnittene Darstellung einer Einzelheit des Filters im Bereich einer Drehdurchführung;
- Fig. 4: eine Schnittdarstellung zu Fig. 3 entlang der Schnittlinie B-B von Fig. 3;
- Fig. 5: eine teilweise geschnittene Darstellung eines Trommelmotors mit daran befestigten Sprüharme.

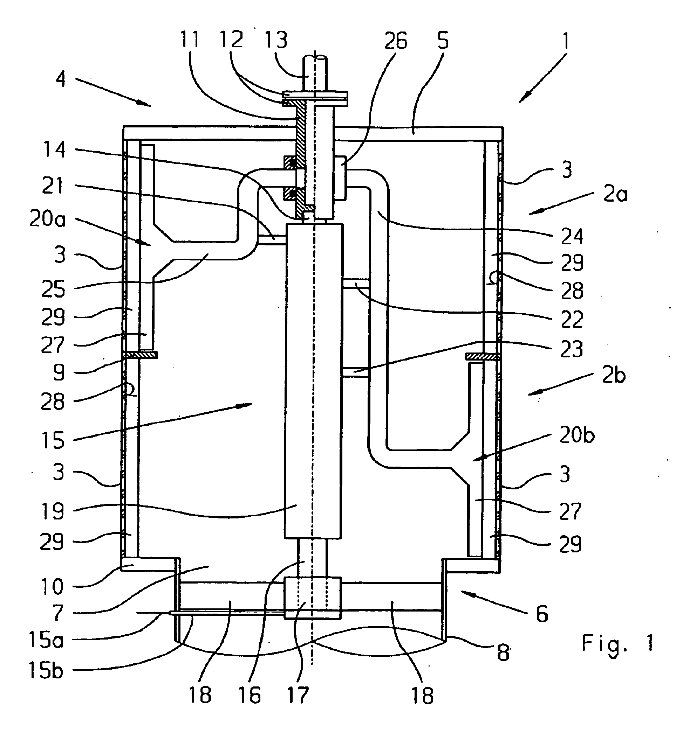

In Fig. 1 ist ein Filter 1 dargestellt, der aus zwei übereinander angeordneten Filterelementen 2a, 2b besteht. Die Filterelemente 2a, 2b weisen jeweils eine zylindrische Filterfläche 3 auf. Ein Ende 4 des Filterelements 2a ist durch eine Abdeckung 5 geschlossen, während ein anderes Ende 6 des Filterelements 2b eine Austrittsöffnung 7 aufweist, an die eine Leitung 8 angeschlossen ist. Zwischen den Filterelementen 2a, 2b befindet sich eine ringförmige Versteifung 9, während das Filterelement 2b im Bereich des anderen Endes 6 einen ringförmigen Boden 10 aufweist, von dem die Leitung 8 ausgeht. Die Filterbauteile können aus Stahlblech, Beton oder Kunststoff ausgeführt sein.

Durch eine Öffnung 11a in der Abdeckung 5 des Filterelements 2a ist ein Rohr 11 durchgeführt und an der Abdeckung 5 befestigt. An das Rohr 11 ist mittels einer Flanschverbindung 12 eine Leitung 13 für ein Spülmedium, z.B. für Druckwasser oder für Druckluft, angeschlossen.

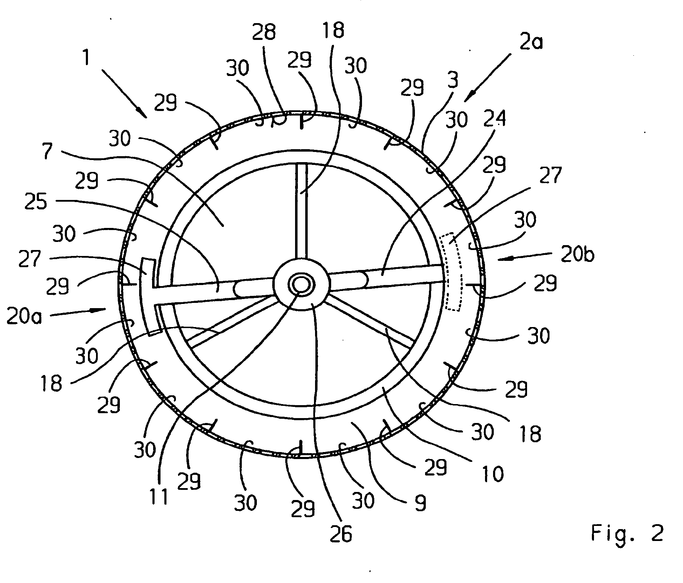

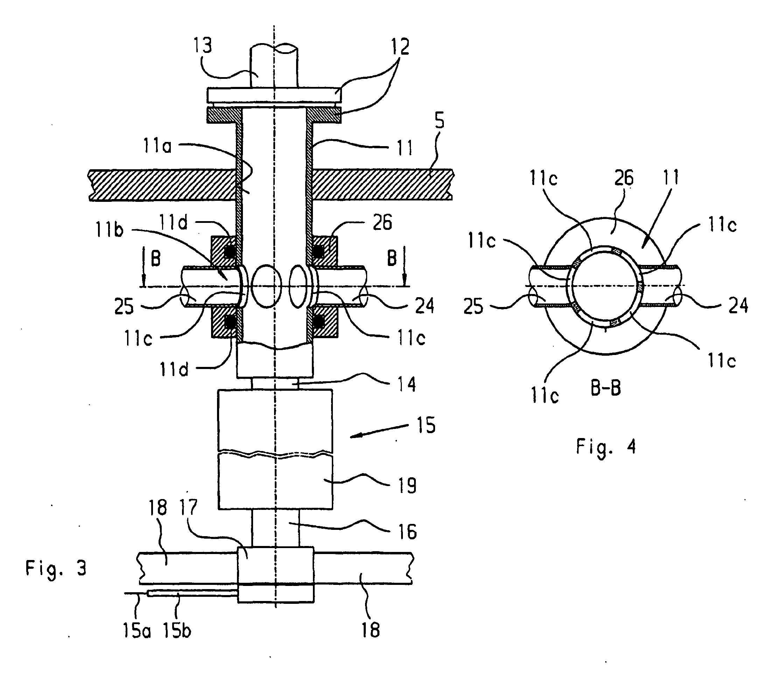

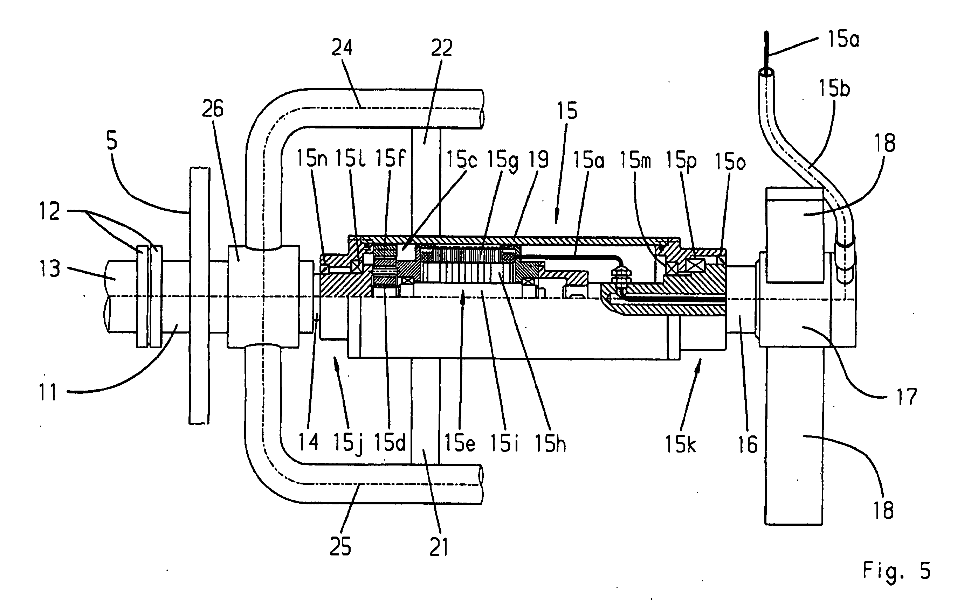

Am inneren Ende des Rohrs 11 ist ein Ende 14 eines koaxial in dem Filter 1 angeordneten Trommelmotors 15 befestigt, dessen anderes Ende 16 in einer Muffe 17 befestigt ist, die mittels radialer Streben 18 in dem Anfangsabschnitt der Leitung 8 befestigt ist (vgl. auch Fig. 2). Die Stromversorgung des Trommelmotors 15 wird durch ein Kabel 15a übernommen, das durch die Wandung der Leitung 8 hindurch mit einem Schutzrohr 15b an einer der radialen Streben 18 und über das andere Ende 16 des Trommelmotors 15 zu diesem geführt ist (vgl. auch Fig. 3 und 5).

Der Trommelmotor 15 ist seinem grundsätzlichen Aufbau nach z.B. aus der WO 2005/051809 A1 ("MOTORIZED DRUM ROLLER WITH FIXED ENDS") bekannt. Alle fluidberührten Bauteile des Trommelmotors 15 bestehen aus seewasserfestem Material, z.B. Edelstahl wie 1.4462 oder 1.4439. Zur Aufnahme axialer Kräfte, wie sie bei der Verwendung des Trommelmotors 15 als Antrieb der Sprüharme 20a, 20b auftreten, kann neben dem Ende 16 des Trommelmotors 15 ein Axiallager 15p vorgesehen werden.

Komponenten des Trommelmotors 15 wie ein Untersetzungsgetriebe 150 zwischen dem Ritzel 15d des Elektromotors 15e und der Innenverzahnung 15f der Trommel 19 sowie die Enden 14, 16 des Trommelmotors 15 sind für die Verwendung des Trommelmotors 15 als Drehantrieb der Sprüharme 20a, 20b ausgelegt. Die Wicklungen des Stators 15g sind an das Kabel 15a angeschlossen. Ein Rotor 15h weist eine Rotorwelle 15i mit dem Ritzel 15d auf. An das Ritzel 15d ist das Untersetzungsgetriebe 15c angeschlossen, das die Trommel 19 über deren Innenverzahnung 15f drehbar antreibt. Die Enden 15j, 15k der Trommel 19 weisen Drehlager 15l, 15m sowie fluidsichere Abdichtungen 15n, 15o auf. An dem Ende 15k ist das Axiallager 15p dargestellt.

An der Trommel 19 des Trommelmotors 15 ist für das Filter 2a der Sprüharm 20a mittels einer Strebe 21 und für das Filter 2b der Sprüharm 20b mittels Streben 22, 23 befestigt (vgl. Fig. 1). Leitungen 24, 25 der Sprüharme 20a, 20b gehen von einer Muffe 26 aus, die mit einer Drehdurchführung 11b auf dem Rohr 11 drehbar gelagert ist, die in Fig. 3 und 4 gesondert dargestellt ist. Im Bereich der offenen Enden der Leitungen 24, 25 weist das Rohr 11 am Umfang verteilte Öffnungen 11c für den Durchgang von Druckwasser oder Druckluft auf. Mit Dichtringen 11d in seewasser- und drehfester Ausführung bildet die Muffe 26 einen drehbaren und abgedichteten Anschluss der Leitungen 24 und 25 an das Rohr 11.

Die Sprüharme 20a, 20b weisen am Ende ihrer Leitungen 24, 25 im Querschnitt bogenförmige Düsen 27 auf, deren Länge jeweils im Wesentlichen der Höhe der Filter 2a, 2b entspricht und deren Öffnung der Innenseite 28 der Filterfläche 3 jeweils in geringem Abstand (vgl. Fig. 1 und 2) unmittelbar gegenüberliegt. Über nicht dargestellte Leitvorrichtungen innerhalb der Düsen 27 wird über die Leitung 13, das Rohr 11 und die Leitungen 24, 25 zwecks Spülung der Innenseite 28 der Filterfläche 3 zugeführtes Druckwasser oder Druckluft gleichmäßig über die Höhe bzw. Länge und Breite der Düsen 27 verteilt.

Am Umfang der Innenseite 28 der Filterfläche 3 sind zur Längsmittelachse des Filters 1 parallele Stege 29 (in Fig. 2 nur durch radiale Striche an der Innenseite 28 der Filterfläche 3 angedeutet) zur Bildung von Kammern 30 gleichmäßig verteilt angeordnet. Die Breite und Höhe der Kammern 30 entspricht im Wesentlichen den Öffnungen, nämlich den offenen Außenseiten der Düsen 27, so dass die nach innen offenen Kammern 30 jeweils durch die Düsen 27 im Wesentlichen abgedeckt werden, wenn die Düsen 27 den Kammern 30 gegenüberstehen.

Wenn der Filter 1 an einer Wasserentnahmestelle eingebaut und die Leitung 8 an der Austrittsöffnung 7 ebenso angeschlossen ist wie die Leitung 13 für die Zuführung des Druckwassers, beginnt die Wasserentnahme, sobald die an der Saugseite in der Leitung 8 angeordnete Pumpe (nicht dargestellt) eingeschaltet wird. Dann strömt Wasser durch die zylinderförmige Filterfläche 3 in die Filterelemente 2a, 2b und von dort über die Austrittsöffnung 7 in die Leitung 8. Dabei wird das Wasser gefiltert, d.h. Schmutzteile werden aus dem Wasser herausgefiltert und lagern sich an der Außenseite der Filterfläche 3 ab, soweit sie nicht durch anderweitige Einflüsse von der Filterfläche 3 weggeschwemmt werden.

Sobald der Verschmutzungsgrad der Filterfläche 3 einen vorgegebenen Wert erreicht, wird der Trommelmotor 15 eingeschaltet, so dass die Sprüharme 20a, 20b zwecks Reinigung der Filterfläche 3 in eine Drehbewegung versetzt werden. Mit der Einschaltung des Trommelmotors 15 beginnt auch die Zuführung des Druckwassers über die Leitung 13, das Rohr 11 und die Leitungen 24, 25 zu den Düsen 27. Aus der Öffnung jeder Düse 27 austretendes Druckwasser oder Druckluft bewirkt eine Rückspülung der Filterfläche 3, d.h., dass Wasser an der Innenseite 28 der Filterfläche 3 von dem Druckwasser durch die Filterfläche 3 hindurch zurückgedrückt wird und auf diese Weise auf der Außenseite der Filterfläche 3 lagernde Verschmutzungen löst und entfernt.

Die Steuerung des Trommelmotors 15 und die Druckwasserführung kann auch so eingestellt werden, dass die Sprüharme 20a, 20b entweder kontinuierlich, also vom Verschmutzunggrad der Filterfläche 3 unabhängig, umlaufen oder aber diskontinuierlich mit Verweilzeiten, wenn die Düsen 27 die Kammern 30 jeweils im Wesentlichen überdeckend vor diesen stehen. Es sind auch andere, hier nicht genannte Steuerungssysteme möglich. Das Gleiche gilt für die Wahl des Spülmediums sowie für die Drucksteuerung bei der Zuführung des Spülmediums über die Leitung 13. Mögliche Variationen des Aufbaus des Filters 1 sind bereits im ersten Teil der Beschreibung angegeben worden.

## Patentansprüche

1. Filter für Fluide, insbesondere Wasser,
- das eine Filterfläche (3) und einen drehbaren Sprüharm (20a, 20b) in dem Filter (1) aufweist,
- mit dem ein Spülmedium gegen die Filterfläche (3) geführt wird,
**dadurch gekennzeichnet, dass**
- ein fluidsicherer Trommelmotor (15) in dem Filter (1) angeordnet ist,
- der mindestens einen Sprüharm (20a, 20b) antreibt, und
- der Sprüharm (20a, 20b) an der Trommel (19) des Trommelmotors (15) befestigt ist.

2. Filter nach Anspruch 1, **dadurch gekennzeichnet, dass** das Filter (1) eine geschlossene Mantelfläche aufweist, die mindestens teilweise aus Filterfläche (3) besteht.

3. Filter nach Anspruch 1 oder 2, **dadurch gekennzeichnet, dass** das Filter (1) ein im Querschnitt ring- oder gleichmäßig oder ungleichmäßig polygonförmiges und/oder im Längsschnitt zylinder- oder kegelstumpfförmiges Filterelement (2a, 2b) aufweist.

4. Filter nach Anspruch 1 oder 2, **dadurch gekennzeichnet, dass** das Filter (1) mindestens ein im Querschnitt kreissegmentförmiges Filterelement (2a, 2b) aufweist.

5. Filter nach einem der Ansprüche 1-4, **dadurch gekennzeichnet, dass** das Filter (1) im Querschnitt aneinander anschließende Filterflächenteile aufweist.

6. Filter nach einem der Ansprüche 1-5, **dadurch gekennzeichnet, dass** das Filter (1) aufeinander gesetzte Filterelemente (2a, 2b) aufweist.

7. Filter nach einem der Ansprüche 1-6, **dadurch gekennzeichnet, dass** das Filter (1) Halterungen (17, 18) zur Befestigung des Trommelmotors (15) aufweist.

8. Filter nach einem der Ansprüche 1-7, **dadurch gekennzeichnet, dass** der von dem Trommelmotor (15) angetriebene Sprüharm (20a, 20b) drehbar an dem Filter (1) gelagert ist.

9. Filter nach einem der Ansprüche 1-8, **dadurch gekennzeichnet, dass** das aus einem oder mehreren Filterelementen (2a, 2b) gebildete Filter (1) mindestens zwei Sprüharme (20a, 20b) aufweist, die auf gleicher Höhe des Filterelementes (2a, 2b) umlaufen oder die - in Drehachsenrichtung gesehen - übereinander angeordnet sind und von dem gleichen Trommelmotor (15) oder getrennt von mindestens zwei Trommelmotoren angetrieben sind

10. Filter nach einem der Ansprüche 1-9, **dadurch gekennzeichnet, dass** der Trommelmotor (15) koaxial in dem Filter (1) angeordnet ist.

11. Filter nach einem der Ansprüche 1-10, **dadurch gekennzeichnet, dass** ein Ende (16) des Trommelmotors (15) in einer Halterung (17, 18) im Bereich einer Austrittsöffnung (7) und ein anderes Ende (14) des Trommelmotors (15) im Bereich eines geschlossenen Endes (4) des Filters (1) befestigt ist.

12. Filter nach einem derAnsprüche 1-11, **dadurch gekennzeichnet, dass** an dem geschlossenen Ende (4) des Filters (1) ein Rohr (11) für das Spülmedium angeordnet ist, mit dem ein Anschluss (26) des Sprüharms (20a, 20b) durch eine Drehdurchführung drehbar verbunden ist.

13. Filter nach einem der Ansprüche 1-12, **dadurch gekennzeichnet, dass** der Sprüharm (20a, 20b) an seinem freien Ende mindestens eine Düse (27) trägt, deren Öffnung auf die Innenseite (28) der Filterfläche (3) gerichtet ist und sich in kurzem Abstand von dieser befindet.

14. Filter nach Anspruch 13, **dadurch gekennzeichnet, dass** die Länge der Düse (27) im Wesentlichen der Höhe der Filterfläche (3) entspricht.

15. Filter nach einem der Ansprüche 13-14, **dadurch gekennzeichnet, dass** die Öffnung der Düse (27) durchgehend gestaltet oder in Öffnungsabschnitte unterteilt ist.

16. Filter nach einem der Ansprüche 13-15, **dadurch gekennzeichnet, dass** die Querschnittsform der Düse (27), insbesondere die Form der Düsenöffnung, der Wölbung der Filterfläche (3) angepasst ist.

17. Filter nach einem der Ansprüche 13-16, **dadurch gekennzeichnet, dass** die Breite der Düse (27) einem Umfangsabschnitt der zylindrischen Filterfläche (3) von 5-90°, vorzugsweise von 10-40° entspricht.

18. Filter nach einem der Ansprüche 13-17, **dadurch gekennzeichnet, dass** die Filterfläche (3) an ihrer Innenseite (28) zur Längsmittelachse des Filters (2a, 2b) parallele Stege (29) aufweist, mit denen die Innenseite (28) der Filterfläche (3) in Kammern (30) unterteilt ist, deren Umfangsabschnitt im Wesentlichen der Breite der Düsenöffnungen entspricht.

19. Filter nach einem der Ansprüche 1-18, **gekennzeichnet durch** eine Steuerung des Trommelmotors (15), mit der die Drehrichtung des Trommelmotors (15) und des Sprüharms (20a, 20b) nach einer vorgegebenen Drehbewegung von z.B. 180° oder, falls die Fortsetzung der Drehbewegung **durch** ein Hindernis blockiert wird, umgekehrt wird.

20. Filter nach einem der Ansprüche 1-19, **dadurch gekennzeichnet, dass** das Filter (1) über eine Leitung oder unmittelbar mit der Saugseite einer Pumpe verbunden ist.

## Claims

1. A filter for fluids, in particular water,
- comprising a filter surface (3) and a rotatable spray arm (20a, 20b) within the filter (1),
- for conducting a flushing medium against the filter surface (3),
**characterized in that**
- a fluid-proof drum motor (15) is arranged within the filter (1),
- for driving at least one spray arm (20a, 20b), and
- the spray arm (20a, 20b) is attached on the drum (19) of the drum motor (15).

2. The filter according to claim 1, **characterized in that** the filter (1) has a closed side surface at least partially comprising the filter surface (3).

3. The filter according to claim 1 or 2, **characterized in that** the filter (1) has a filter element (2a, 2b) annular or regularly or irregularly polygonal in cross section and/or cylindrical or frusto-conical in longitudinal section.

4. The filter according to claim 1 or 2, **characterized in that** the filter (1) has at least one filter element (2a, 2b) having a circular segment shape in cross section.

5. The filter according to any one of claims 1 - 4, **characterized in that** the filter (1) has filter surface portions continuous in cross section.

6. The filter according to any one of claims 1 - 5, **characterized in that** the filter (1) has filter elements (2a, 2b) stacked on top of each other.

7. The filter according to any one of claims 1 - 6, **characterized in that** the filter (1) has fixtures (17, 18) for attaching the drum motor (15).

8. The filter according to any one of claims 1 - 7, **characterized in that** the spray arm (20a, 20b) driven by the drum motor (15) is rotatably supported on the filter (1).

9. The filter according to any one of claims 1 - 8, **characterized in that** the filter (1) comprised of one or more filter elements (2a, 2b) has at least two spray arms (20a, 20b), rotating at the same height of the filter element (2a, 2b), or arranged one above the other - as seen in the direction of the rotary axis - and driven by the same drum motor (15) or separately driven by at least two drum motors.

10. The filter according to any one of claims 1 - 9, **characterized in that** the drum motor (15) is arranged coaxial with the filter (1).

11. The filter according to any one of claims 1 - 10, **characterized in that** one end (16) of the drum motor (15) is attached in a fixture (17, 18) in the area of an outlet opening (7) and another end (14) of the drum motor (15) is attached in the area of a closed end (4) of the filter (1).

12. The filter according to any one of claims 1 - 11, **characterized in that**, at the closed end (4) of the filter (1), a tube (11) for the flushing medium is arranged, with which a connection (26) of the spray arm (20a, 20b) is rotatably connected through a rotary passage.

13. The filter according to any one of claims 1 - 12, **characterized in that** the spray arm (20a, 20b) carries at least one nozzle (27) on its free end, the opening of which is directed toward the inside (28) of the filter surface (3) and is at a short distance to the latter.

14. The filter according to claim 13, **characterized in that** the length of the nozzle (27) essentially corresponds to the height of the filter surface (3).

15. The filter according to any one of claims 13 - 14, **characterized in that** the opening of the nozzle (27) is configured to be continuous or to be subdivided into opening sections.

16. The filter according to any one of claims 13 - 15, **characterized in that** the cross-sectional shape of the nozzle (27), in particular the form of the nozzle opening, is matched to the curvature of the filter surface (3).

17. The filter according to any one of claims 13 - 16, **characterized in that** the width of the nozzle (27) corresponds to a circumferential section of the cylindrical filter surface (3) of 5 - 90°, preferably of 10 - 40°.

18. The filter according to any one of claims 13 -17, **characterized in that** the filter surface (3) has webs (29) at its inner surface (28) parallel to the longitudinal center axis of the filter (2a, 2b) for subdividing the inner surface (28) of the filter surface (3) into chambers (30), the circumferential section of which essentially corresponds to the width of the nozzle openings.

19. The filter according to any one of claims 1 - 18, **characterized by** a control of the drum motor (15) for reversing the sense of rotation of the drum motor (15) and spray arm (20a, 20b) after a predetermined rotary motion of 180°, for example, or if the continuation of the rotary motion is blocked by an obstruction.

20. The filter according to any one of claims 1 - 19, **characterized in that** the filter (1) is connected to the suction side of a pump via a conduit or directly.

## Revendications

1. Filtre pour fluides, en particulier pour de l'eau.
- qui présente une surface filtrante (3) et un bras asperseur rotatif (20a, 20b) dans le filtre (1),
- avec lequel un agent de rinçage est guidé contre la surface filtrante (3),
**caractérisé en ce**
- **qu'**un moteur à tambour (15) protégé contre les fluides est placé dans le filtre (1),
- moteur qui entraîne au moins un bras asperseur (20a, 20b)
et
- **que** le bras asperseur (20a, 20b) est fixé sur le tambour (19) du moteur à tambour (15).

2. Filtre selon la revendication 1, **caractérisé en ce que** le filtre (1) présente une surface d'enveloppe fermée qui est constituée par au moins partiellement par la surface filtrante (3).

3. Filtre selon la revendication 1 ou 2, **caractérisé en ce que** le filtre (1) présente un élément filtrant (2a, 2b) de section annulaire ou en forme de polygone régulier ou irrégulier et/ou de section longitudinale en forme de cylindre ou de cône tronqué.

4. Filtre selon la revendication 1 ou 2, **caractérisé en ce que** le filtre (1) présente au moins un élément filtrant (2a, 2b) de section en forme de segment circulaire.

5. Filtre selon l'une des revendications 1 à 4, **caractérisé en ce que** le filtre (1) présente des parties de surface filtrante adjacentes les unes aux autres en section.

6. Filtre selon l'une des revendications 1 à 5, **caractérisé en ce que** le filtre (1) présente des éléments filtrants (2a, 2b) posés les uns sur les autres.

7. Filtre selon l'une des revendications 1 à 6, **caractérisé en ce que** le filtre (1) présente des supports (17, 18) pour la fixation du moteur à tambour (15).

8. Filtre selon l'une des revendications 1 à 7, **caractérisé en ce que** le bras asperseur (20a, 20b) entraîné par le moteur à tambour (15) est positionné rotatif sur le filtre (1).

9. Filtre selon l'une des revendications 1 à 8, **caractérisé en ce que** le filtre (1) formé par un ou plusieurs éléments filtrants (2a, 2b) présente au moins deux bras asperseurs (20a, 20b) qui tournent à la même hauteur de l'élément filtrant (2a, 2b) ou qui sont placés l'un au-dessus de l'autre - ceci étant vu dans le sens de l'axe de rotation - et qui sont entraînés par le même moteur à tambour (15) ou séparément par au moins deux moteurs à tambour.

10. Filtre selon l'une des revendications 1 à 9, **caractérisé en ce que** le moteur à tambour (15) est placé coaxial dans le filtre (1).

11. Filtre selon l'une des revendications 1 à 10, **caractérisé en ce qu'**une extrémité (16) du moteur à tambour (15) est fixée dans un support (17, 18) dans la zone d'une ouverture de sortie (7) et qu'une autre extrémité (14) du moteur à tambour (15) est fixée dans la zone d'une extrémité fermée (4) du filtre (1).

12. Filtre selon l'une des revendications 1 à 11, **caractérisé en ce qu'**un tuyau (11) pour l'agent de rinçage, avec lequel un raccord (26) du bras asperseur (20a, 20b) est relié rotatif par un passage rotatif, est placé à l'extrémité fermée (4) du filtre (1).

13. Filtre selon l'une des revendications 1 à 12, **caractérisé en ce que** le bras asperseur (20a, 20b) porte, à son extrémité libre, au moins une tuyère (27) dont l'ouverture est dirigée sur le côté intérieur (28) de la surface filtrante (3) et qui se trouve à une courte distance de celle-ci.

14. Filtre selon la revendication 13, **caractérisé en ce que** la longueur de la tuyère (27) correspond substantiellement à la hauteur de la surface filtrante (3).

15. Filtre selon l'une des revendications 13-14, **caractérisé en ce que** l'ouverture de la tuyère (27) est configurée continue ou est divisée en sections d'ouverture.

16. Filtre selon l'une des revendications 13-15, **caractérisé en ce que** la forme de la section de la tuyère (27), en particulier la forme de l'ouverture de la tuyère, est adaptée à la courbure de la surface filtrante (3).

17. Filtre selon l'une des revendications 13-16, **caractérisé en ce que** la largeur de la tuyère (27) correspond à une section de circonférence de la surface filtrante cylindrique (3) de 5 à 90°, de préférence de 10 à 40°.

18. Filtre selon l'une des revendications 13-17, **caractérisé en ce que** la surface filtrante (3) présente, sur sa face intérieure (28), des baguettes (29) parallèles à l'axe médian longitudinal du filtre (2a, 2b) avec lesquelles la face intérieure (28) de la surface filtrante (3) est divisée en chambres (30) dont la section de circonférence correspond substantiellement à la largeur des ouvertures de tuyère.

19. Filtre selon l'une des revendications 1-18, **caractérisé par** une commande du moteur à tambour (15) avec lequel le sens de rotation du moteur à tambour (15) et du bras asperseur (20a, 20b) est inversé après un mouvement de rotation prédéfini de, par exemple, 180° ou au cas où la poursuite du mouvement de rotation est bloquée par un obstacle.

20. Filtre selon l'une des revendications 1-19, **caractérisé en ce que** le filtre (1) est relié par une conduite ou directement au côté aspiration d'une pompe.
